# EUROPÄISCHE PATENTSCHRIFT

(11) **EP 2 350 104 B1**
(45) Veröffentlichungstag und Bekanntmachung des Hinweises auf die Patenterteilung: **15.01.2014**
(21) Anmeldenummer: 09737389.8
(22) Anmeldetag: 09.10.2009
(51) Int. Cl.: C07F 9/6574

(54) **VERFAHREN ZUR HERSTELLUNG VON 6-CHLORODIBENZOÝD,F¨Ý1,3,2¨-DIOXAPHOSPHEPIN**
METHOD FOR PRODUCING 6-CHLORODIBENZOÝD,F¨Ý1,3,2¨-DIOXAPHOSPHEPIN
PROCÉDÉ DE PRODUCTION DE 6-CHLORODIBENZOÝD,F¨Ý1,3,2¨-DIOXAPHOSPHÉPINE

(30) Priorität: 07.11.2008 DE 102008043584
(43) Veröffentlichungstag der Anmeldung: 03.08.2011
(73) Patentinhaber: Evonik Degussa GmbH, 45128 Essen (DE)
(72) Erfinder: FRIDAG, Dirk, 45721 Haltern am See (DE); FRANKE, Robert, 45772 Marl (DE); SCHEMMER, Bernhard, Haltern am See 45721 (DE); KREIDLER, Burkard, 45657 Recklinghausen (DE); WECHSLER, Bjoern, 46325 Borken (DE)
(86) Internationale Anmeldenummer: PCT/EP2009/063150
(87) Internationale Veröffentlichungsnummer: WO 2010/052091

(56) Entgegenhaltungen:
- WO-A1-2005/063776
- WO-A1-2009/120210

## Beschreibung

Die Erfindung betrifft ein Verfahren zur Herstellung von 6-Chlorodibenzo[d,f] [1,3,2]-dioxaphosphepin, Verbindung **1**.

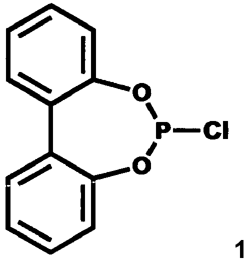

Verbindung **1** ist ein Baustein, der u. a. in der Ligandensynthese eine wichtige Rolle spielt.

Ein solcher Ligand ist z. B. die Verbindung **2**, 6,6'-[(3,3'-Di-tert.-butyl-5,5'-dimethoxy-1,1'-biphenyl-2,2'-diyl)bis(oxy)]bis(dibenzo[d,f][1,3,2]dioxaphosphepin), kurz Biphephos genannt, die in übergangsmetallkatalysierten Reaktionen verbreitete Verwendung gefunden hat.

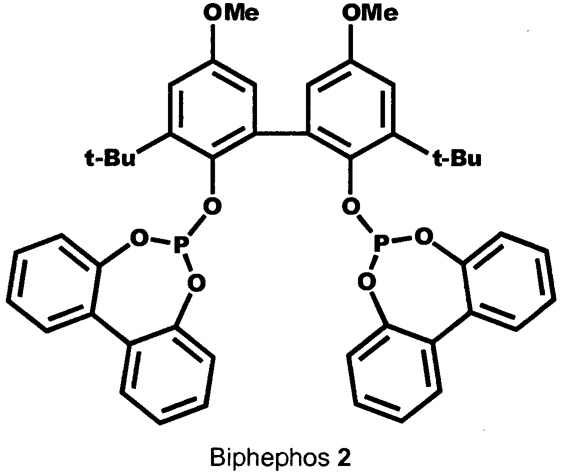

Die Verbindung **2** wird beispielsweise in der übergangsmetallkatalysierten Hydroaminomethylierung (E. Petricci, A. Mann, J. Salvadori, M. Taddei, Tetrahedron Letters 2007, 48, 8501-8504), der Hydrocyanierung (US 5,449,807), der Hydroformylierung (US 4,769,498, CN1986055), der Isomerisierung (US 5,440,067) und der Cyclohydrocarbonylierung (US 5,962,744) von Olefinen eingesetzt.

Die Darstellung von Verbindung **2** wird üblicherweise in 3 Syntheseschritten aus kommerziell verfügbaren Ausgangsmaterialien hergestellt: Zur Herstellung des Rückgrats wird 3-tert.-Butyl-4-hydroxyanisol oxidativ zur Biarylverbindung 3,3'-tert.-Butyl-2,2'-dihydroxy-5,5'-dimethoxybiphenyl umgesetzt. Zur Herstellung der Seitenflügel wird Phosphortrichlorid mit 2,2'-Dihydroxybiphenyl zur Reaktion gebracht, um Verbindung **1** zu bilden. Schließlich werden die Reaktionsprodukte beider genannter Schritte miteinander in Gegenwart einer Base zu Biphephos 2 kondensiert.

Alle bisher bekannten Verfahren zur Herstellung von Verbindung **1**, (6-Chlorodibenzo[d,f][1,3,2]-dioxaphosphepin) führen zur Bildung unerwünschter Nebenprodukte, damit einer reduzierten Ausbeute oder aber erfordern einen hohen energetischen oder zeitlichen Aufwand.

So wird in US 4,769,498 Phosphortrichlorid zu 2,2'-Dihydroxybiphenyl getropft, wobei phosphitische Nebenprodukte entstehen, die nur durch mehrstündiges, energieintensives thermisches Äquilibrieren weitgehend zurückgedrängt werden können (vgl. L. Anschütz, W. Marquardt, Chem. Ber. 1956, 89, 1119-1123) oder/und es muss eine aufwändige Vakuumdestillation des Produktes erfolgen, die entweder sehr hohe Temperaturen (ebenda sowie bei L. V. Verizhnikov und P. A. Kirpichnkov, Zh. Obshch. Khim., 1967, 37, 1355) oder großtechnisch schwierig zu realisierende Vakua von 130 Pa und weniger (EP 0 730 574 sowie V. N. Tsarev, A. A. Kabro, S. K. Moiseev, V. N. Kalinin, O. G. Bondarev, V. A. Davankov, K. N. Gavrilov, Russ. Chem. Bull., Int. Ed. Vol 53, 2004, 814-818) erfordern.

In CN1986055 hingegen wird ein Überschuss an Phosphortrichlorid vorgelegt und 2,2'-Dihydroxybiphenyl hinzugefügt. Nähere Angaben über die Art und Weise der Zugabe, wie auch der Reaktionsführung, einer gegenüber Phosphortrichlorid derart hochreaktiven Verbindung, wie 2,2'-Dihydroxybiphenyl, werden jedoch nicht gemacht. Zur Abtrennung von Verbindung **1** aus dem Reaktionsgemisch und dessen weiterer Reinigung wird die Vakuumdestillation angewandt, wobei wiederum nähere Angaben, wie z. B. Druck- und Temperaturbereich, fehlen. Die Ausbeute an **1** beträgt lediglich 71 %. Eine nähere Charakterisierung von **1** wird nicht offenbart.

Das in FR 2873696 sinngemäß vorgestellte Verfahren erfordert zum Erhalt ausreichender Selektivität eine energieintensive Kühlung der Reaktionsmischung auf 0 °C sowie zum Abfangen des entstehenden Chlorwasserstoffgases die Zugabe eines Amins mit den Folgen, dass ein Aminhydrochlorid entsteht, welches abfiltriert werden muss. Da die gesamte Reaktionsmischung jedoch hoch korrosiv ist, erfordert diese eine teuere, da korrosionsarme Filtrationsapparatur, beispielsweise aus DIN 2.4610 Legierungen. Zudem muss der entstehende Aminhydrochloridabfall aufwändig entsorgt oder recyclisiert werden.

Die Autoren stellten weiterhin fest, dass bei dem von A. van Rooy, P. C. J. Kamer, P. W. N. M. van Leeuwen, K. Goubitz, J. Fraanje, N. Veldman und A. L. Spek in Organometallics 1996, 15, 835-847 vorgestellten Verfahren in Tetrahydrofuran die dort beschriebene Basenzugabe unerlässlich ist, da ansonsten bis zu 10 % an Nebenprodukten, die durch saure Spaltung des Tetrahydrofurans entstehen, gebildet werden können. Die notwendige Zugabe eines Amins erfordert jedoch wiederum die aufwändige Filtration und/oder eine Vakuumdestillation.

Weiterhin ist neben den Aspekten Produktausbeute sowie Reinheit für die sichere Durchführung des erfindungsgemäßen Verfahrens, insbesondere mit Blick auf die Umsetzung in ein industrielles Verfahren, entscheidend, dass die Zugabe des 2,2'-Dihydroxybiphenyl derart erfolgt, dass die Wärmeabfuhr dieser Kondensationsreaktion kontrolliert erfolgt.

In Zh. Obshch. Khim., 1967, 37, 1355 berichten L. V. Verizhnikov und P. A. Kirpichnkov über eine Verfahrensvariante, bei welcher die Edukte Phosphortrichlorid und 2,2'-Dihydroxybiphenyl bei Zimmertemperatur gemischt, zum Sieden erhitzt und anschließend per Hochvakuumdestillation das Produkt abgetrennt werden. Da dort zwei hochreaktive Verbindungen direkt gemischt werden, kann das Kriterium der kontrollierten Wärmeabfuhr bei entsprechend großen Ansätzen nicht mehr garantiert werden. Die Wärmetönung der Reaktion beträgt -54 kJ/mol und ist damit stark exotherm. Die kontrollierte Wärmeabfuhr ist jedoch aus Sicherheitsgründen im industriellen Maßstab unbedingt erforderlich. Bei der direkten Mischung zweier hochreaktiver Verbindungen könnte ansonsten die gesamte Wärmemenge schlagartig freigesetzt werden. Diese Wärmemenge kann bei kleinen Laboransätzen noch gefahrlos abgeführt werden, bei Umsetzungen im industriellen Maßstab liegt hier jedoch ein erhebliches Gefahrenpotenzial.

WO 2005/063776 A1 offenbart ein Verfahren zur Herstellung von 6-Chlorodibenzo[d,f][1,3,2]-dioxaphosphepin, in dem zu einem Gemisch aus Lewatit MP62 und PCl3 in Toluol eine Lösung von 2,2,'-Dihydroxybiphenyl in Toluol zugetropft wird und das entstehende HCl durch einen Ionenaustauscher in situ neutralisiert wird.

Es bestand daher die Aufgabe, ein Verfahren zu entwickeln, das Verbindung **1** aus 2,2'-Dihydroxybiphenyl und Phosphortrichlorid in hoher Ausbeute und Reinheit bereitstellt, ohne auf energieintensive Äquilibrier- oder Kühlvorgänge zurückzugreifen und das ohne Produktdestillation, Basenzugabe oder Verwendung von Tetrahydrofuran auskommt. Im Idealfall ist das Verfahren auch in großtechnischen Maßstäben sicher zu handhaben.

Es wurde gefunden, dass diese Aufgabe gelöst werden kann, durch ein Verfahren zur Herstellung von 6-Chlorodibenzo[d,f] [1,3,2]-dioxaphosphepin, welches folgende Schritte umfasst:
a) Zugabe von 2,2'-Dihydroxybiphenyl, welches in einem inerten Lösungsmittel suspendiert ist, in einen Reaktor zu einem Überschuss an Phosphortrichlorid unter Inertgas und Rühren;
b) Ableitung und Neutralisierung der entstehenden Gase aus dem Reaktionsgemisch;
c) Abtrennen des überschüssigen Phosphortrichlorids sowie des Lösungsmittels, vorzugsweise nach Reaktionsende;
d) Erhalt von 6-Chlorodibenzo[d,f] [1,3,2]-dioxaphosphepin,
   wobei die Suspension unter a) einen Feststoffanteil im Bereich von 10 bis 60 Massen-% aufweist sowie dass mindestens 90 % der Partikel des eingesetzten 2,2'-Dihydroxybiphenyls eine Partikelgröße von 1 bis 1000 Mikrometer aufweisen sowie in c) fraktionierend destillativ abgetrenntes Phosphortrichlorid und der aromatische Kohlenwasserstoff wieder in dem Herstellprozess eingesetzt werden.

Entscheidend für das erfindungsgemäße Verfahren ist die Zugabe des 2,2'-Dihydroxybiphenyls als Suspension in einem inerten Lösungsmittel zu einem Überschuss Phosphortrichlorid. Insbesondere liegt ein 2- bis 25-facher, vorzugsweise ein 10- bis 15-facher Überschuss an Phosphortrichlorid vor, bezogen auf molare Verhältnisse. Besonders bevorzugt erfolgt die Zugabe von 2,2'-Dihydroxybiphenyl bei einem Druckbereich von 0,07 bis 0,12 MPa. Inerte Lösungsmittel im Sinne der vorliegenden Erfindung sind grundsätzlich alle Lösungsmittel die unter den genannten Bedingungen stabil und unreaktiv sind. Vorzugsweise handelt es sich bei dem inerten Lösungsmittel um einen aromatischen Kohlenwasserstoff oder Kohlenwasserstoffgemisch, beispielsweise Xylole oder Toluol, insbesondere um Toluol. Im Falle von aromatischen Kohlenwasserstoffgemischen enthalten diese vorzugsweise überwiegend Toluol, insbesondere mehr als 50 Gew.-% Toluol. Im Regelfall sind Dosiervorgänge in Suspension technisch schwierig durchzuführen, da absinkende Feststoffpartikel schnell zur Verstopfung von Dosierleitungen führen. Diese Suspension wird vorzugsweise anhand der nachfolgenden Parameter auf folgende Wertebereiche eingestellt, wobei:
- der Feststoffanteil der Suspension in einem Bereich von mind. 10 bis 60 Massen-% variiert sowie
- mind. 90 % der Partikel des suspendierten 2,2'-Dihydroxybiphenyl eine Größe von min. 1 bis max. 1000 Mikrometer aufweisen.

Die Steuerung und Kontrolle dieser Parameter wird beispielsweise mittels kommerziell erhältlicher Laserbeugungsmessung gewährleistet, die dem Fachmann hinlänglich bekannt ist. Nähert sich der Feststoffanteil beispielsweise der unteren Grenze, kann durch erneutes Rühren die Suspension wieder durchmischt und damit der Feststoffanteil wieder erhöht werden.

Nach beendeter Reaktion werden überschüssiges Phosphortrichlorid und das oder die inerten Lösungsmittel, vorzugsweise überwiegend Toluol enthaltend, abgetrennt. Bevorzugt erfolgt diese Abtrennung mittels Destillation, vorzugsweise bei Unterdruck, die besonders bevorzugt fraktionierend durchgeführt wird. Zurückgewonnenes Phosphortrichlorid und das Lösungsmittel werden wieder in dem Syntheseprozess eingesetzt. Zurück bleibt Verbindung **1** in annähernd quantitativer Ausbeute und in hoher Reinheit.

Diese Ausführungsform der Erfindung zeigt überraschenderweise, dass bei Umgebungstemperatur und ohne Basenzugabe nur minimale Mengen an Nebenprodukten gebildet werden, und dass die Sedimentationsgeschwindigkeit des 2,2'-Dihydroxybiphenyls in Toluol so gering ist, dass auch bei nur gelindem Rühren in der Dosiervorlage keine störenden Verstopfungs- oder Verklumpungsprozesse zu beobachten sind.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiel

In einer mit Stickstoff inertisierten 1000 mL Eduktvorlage wurden 177,65 g (960 mmol) pulverförmiges 2,2'-Dihydroxybiphenyl, in dem mindestens 90 % der Kristalle eine Korngröße zwischen einem und 1000 Mikrometer aufweisen, in 710,61 g Toluol unter Rühren suspendiert. Die Einhaltung dieser Partikelgrößenverteilung ist vorteilhaft für die Stabilität der Suspension. Mittels Laserbeugungsmessung wurde der Feststoffanteil der Suspension von bis zu 60 % überwacht. Bei Annäherung dieses Wertes an die untere Grenze von 10 Massen-% wurde durch Wiederaufnahme des Rührens der obere Grenzwert wiederhergestellt. In einem mit Stickstoff inertisierten 6000 mL Reaktor wurden 1574 g (11,46 mol) Phosphortrichlorid vorgelegt. Zur Kontrolle der Wärmetönung wurde der 6000 mL Reaktor auf 20 °C thermostatisiert und gerührt. Der Reaktor war über einen mit Natronlauge gefüllten Abluftwäscher an eine Membranpumpe angeschlossen. Es wurde ein Arbeitsdruck von 0,07 bis 0,09 MPa eingestellt, um entstehende Gase sicher über den Abluftwäscher abzuleiten. Die Eduktvorlage war oberhalb des Reaktors angebracht und an dessen tiefster Stelle über ein Glasrohr mit dem Deckel des Reaktors verbunden. Am Auslass der Eduktvorlage wurde der Suspensionsstrom mittels eines Kugelhahns geregelt. Innerhalb von 2,5 h leitete man den Inhalt der Eduktvorlage in den Reaktor. Der Hahn war jederzeit leicht zu öffnen und zu schließen. Es trat keine Verstopfung oder Verklumpung ein. Nach erfolgter Zugabe rührte man 15 Minuten bei 20 °C nach, worauf eine klare, schwach gelbe Lösung im Reaktor vorlag. Anschließend wurde der Reaktor auf bis zu 0,02 MPa evakuiert und auf 50 °C erwärmt. Man destillierte überschüssiges Phosphortrichlorid und toluolhaltiges Lösungsmittel in mit Stickstoff inertisierte Vorlagen ab. Man erhöhte die Reaktortemperatur schrittweise auf bis zu 91 °C. Nach 2,25 h war die Destillation abgeschlossen. Zurück blieb eine nahezu farblose, hochviskose Flüssigkeit.

Ausbeute: > 99 % der Theorie. Reinheit: 98 %; ermittelt per GC/MS und ³¹P-NMR-Messung (500 MHz Hochfeldmessung mit 85 % Orthophosphorsäure als externen Standard, **1** gelöst in d8-Toluol) mit einer Verschiebung von δ = 185,21 ppm.

## Patentansprüche

1. Verfahren zur Herstellung von 6-Chlorodibenzo[d,f] [1,3,2]-dioxaphosphepin, welches folgende Schritte umfasst:
a) Zugabe von 2,2'-Dihydroxybiphenyl, welches in einem inerten Lösungsmittel suspendiert ist, in einen Reaktor zu einem Überschuss an Phosphortrichlorid unter Inertgas und Rühren;
b) Ableitung und Neutralisierung der entstehenden Gase aus dem Reaktionsgemisch;
c) Abtrennen des überschüssigen Phosphortrichlorids sowie des Lösungsmittels,
d) Erhalt von 6-Chlorodibenzo[d,f] [1,3,2]-dioxaphosphepin,
wobei die Suspension unter a) einen Feststoffanteil im Bereich von 10 bis 60 Massen-% aufweist sowie dass mindestens 90 % der Partikel des eingesetzten 2,2'-Dihydroxybiphenyls eine Partikelgröße von 1 bis 1000 Mikrometer aufweisen sowie in c) fraktionierend destillativ abgetrenntes Phosphortrichlorid und der aromatische Kohlenwasserstoff wieder in dem Herstellprozess eingesetzt werden.

2. Verfahren nach den Anspruch 1, **dadurch gekennzeichnet, dass** als inertes Lösungsmittel ein aromatischer Kohlenwasserstoff oder Kohlenwasserstoffgemisch verwendet wird.

3. Verfahren nach Anspruch 2, **dadurch gekennzeichnet, dass** das aromatische Kohlenwasserstoffgemisch überwiegend Toluol enthält.

4. Verfahren nach den Ansprüchen 1 bis 3, **dadurch gekennzeichnet, dass** die Abtrennung von überschüssigem Phosphortrichlorid und aromatischen Kohlenwasserstoffgemisch destillativ bei Unterdruck erfolgt.

## Claims

1. A process for preparing 6-chlorodibenzo[d,f]-[1,3,2]dioxaphosphepin, which comprises the following steps:
a) addition of 2,2'-dihydroxybiphenyl suspended in an inert solvent to an excess of phosphorus trichloride under inert gas in a reactor and stirring;
b) discharge and neutralization of the resulting gases from the reaction mixture;
c) removal of the excess phosphorus trichloride and also of the solvent;
d) isolation of 6-chlorodibenzo[d,f][1,3,2]dioxaphosphepin,
wherein the suspension in a) has a solids content in the range from 10 to 60% by mass and at least 90% of the particles of the 2,2'-dihydroxybiphenyl used have a particle size of from 1 to 1000 microns and phosphorus trichloride removed by fractional distillation in c) and the aromatic hydrocarbon are reused in the preparative process.

2. A process according to claim 1, **characterized in that** an aromatic hydrocarbon or hydrocarbon mixture is used as inert solvent.

3. A process according to claim 2, **characterized in that** the aromatic hydrocarbon mixture contains predominantly toluene.

4. A process according to any of claims 1 to 3, **characterized in that** the removal of excess phosophorus trichloride and aromatic hydrocarbon mixture is carried out by distillation under subatmospheric pressure.

## Revendications

1. Procédé de fabrication de 6-chlorodibenzo[d,f][1,3,2]-dioxaphosphépine, qui comprend les étapes suivantes :
a) l'ajout de 2,2'-dihydroxybiphényle, qui est suspendu dans un solvant inerte, dans un réacteur à un excès de trichlorure de phosphore sous gaz inerte et agitation ;
b) le déchargement et la neutralisation des gaz formés du mélange réactionnel ;
c) la séparation du trichlorure de phosphore en excès et du solvant,
d) l'obtention de 6-chlorodibenzo[d,f][1,3,2]-dioxaphosphépine,
dans lequel la suspension en a) présente une teneur en solides dans la plage allant de 10 à 60 % en masse et au moins 90 % des particules du 2,2'-dihydroxybiphényle utilisé présentent une taille de particule de 1 à 1 000 micromètres, et le trichlorure de phosphore et l'hydrocarbure aromatique séparés par distillation fractionnée en c) sont réutilisés dans le procédé de fabrication.

2. Procédé selon la revendication 1, **caractérisé en ce qu'**un hydrocarbure aromatique ou un mélange d'hydrocarbures est utilisé en tant que solvant inerte.

3. Procédé selon la revendication 2, **caractérisé en ce que** le mélange d'hydrocarbures aromatiques contient principalement du toluène.

4. Procédé selon les revendications 1 à 3, **caractérisé en ce que** la séparation du trichlorure de phosphore en excès et du mélange d'hydrocarbures aromatiques a lieu par distillation à une sous-pression.
